(19) Europäisches Patentamt
European Patent Office
Office européen des brevets

(11) Publication number: **0 191 209 B1**

(12) **EUROPEAN PATENT SPECIFICATION**

(45) Date of publication of patent specification: **25.01.89**

(51) Int. Cl.$^4$: **B 01 D 13/04,** C 01 B 3/50

(21) Application number: **85300969.4**

(22) Date of filing: **14.02.85**

(54) **Thin-film semipermeable membranes, a method for their preparation and hydrogen-sensing and-separating devices including them.**

(43) Date of publication of application:
**20.08.86 Bulletin 86/34**

(45) Publication of the grant of the patent:
**25.01.89 Bulletin 89/04**

(84) Designated Contracting States:
**AT BE CH DE FR GB IT LI NL SE**

(56) References cited:
**DE-A-1 592 288**
**DE-A-2 750 874**
**US-A-4 024 036**

**CHEMICAL ABSTRACTS, vol. 78, no. 23, 11th June 1973, page 474, column 2, abstract nr. 154565k, Columbus, Ohio, US; C.J. COETZEE et al.: "Potentiometric studies with thallium (I)-heteropoly acid salt-epoxy resin membranes", & ANALYTICA CHIMICA ACTA 1973, 64(2), 300-304**

**Ullmann Encykopädie der technishen Chemie, 4, neuberarbeitete und erweiterte Auflage, Band 16, page 527**

(73) Proprietor: **UOP Inc.**
**10 UOP Plaza Algonquin & Mt. Prospect Roads**
**Des Plaines Illinois 60016 (US)**

(72) Inventor: **Polak, Anthony J.**
**1427 Sandy Pass**
**Lake Zurich Illinois 60047 (US)**
Inventor: **Beuhler, Allyson J.**
**1517 West 65th Place**
**Indian Head Park Illinois 60525 (US)**
Inventor: **Cramm, Joan A.**
**415 East Prospect Avenue**
**Mount Prospect Illinois 60056 (US)**

(74) Representative: **Brock, Peter William**
**UOP Processes International Corporation 48 Leicester Square**
**London WC2H 7LW (GB)**

**EP 0 191 209 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Semipermeable membranes may be used for a wide variety of separations involving liquid-liquid separations, liquid-liquid solid separations and gas-gas separations. The membranes which are employed for these purposes usually comprise various organic polymers or mixtures of organic polymers either alone or supported on a porous backing material. For example, semipermeable membranes which are used in desalination processes can comprise cellulose acetate polymers composited on a porous support which acts as a backing for the membrane, thin film composite membranes comprising polymeric compounds such as polyethyleneimine, epiamine, polyethylene, polypropylene films also composited on a porous support such as a polysulfone member, etc. Likewise, gaseous separation membranes may comprise polymeric membranes of cellulose nitrate or cellulose acetate support membranes having a polymer such as dimethylsilicone, styrene, silicon-carbide copolymers composited thereon, as well as thin film membranes such as polymethylpentene polymers. In addition to these membranes other permselective membranes such as heteropoly acids may be employed for separating gases such as hydrogen from mixtures of gases in a gaseous stream.

For example US—A—4024036 discloses proton permselective solid state members which can comprise various heteropoly acids and salts, which can either be used as such, or in admixture with fluorine resins to improve mechanical strength.

In a majority of cases, the admixture of an organic compound, especially in a polymeric state, with an inorganic compound, results in a phase separation, the two systems being immiscible in nature. However, we have now discovered that a thin-film polymer-blend membrane may be fabricated by admixing an inorganic compound such as a heteropoly acid or a salt thereof or a phosphoric acid or a sulfuric acid with an organic polymer which is compatible with said inorganic compound to form a polymer blended composition of matter which may be utilized as a membrane in a gas separation process. It was totally unexpected that a thin film membrane could be cast from such a blend to provide a membrane which would be highly selective to certain gases and therefore find a use in such separations involving a gas such as hydrogen.

This invention relates to compositions of matter which may be used as gas separation membranes. More specifically, the invention is concerned with a novel thin film polymer-blend membrane which is used in gas separation processes.

A conventional operation for separating certain gases from a gas stream containing a mixture of gases whereby a desired gas may be separated and recovered involves the use of membranes which possess a high permeability to the molecular form of the desired gas such as oxygen, hydrogen, nitrogen, etc. These membranes, especially in the case of hydrogen, possess a high permeability to hydrogen whereby molecular hydrogen is transported from the high pressure side of the device, through the membrane and emerges as molecular hydrogen on the low pressure side. Alternatively, separation of gases may be attained by dissociating the desired gas on the high pressure side and transporting it as an ion through the membrane followed by recombining the ions on the low pressure side. Therefore, a desirable membrane for hydrogen separation should possess excellent protonic conductivity properties. As will hereinafter be shown in greater detail, we have now discovered that membranes which contain both organic and inorganic components will possess this desired property and therefore may be used as hydrogen sensors, hydrogen separation devices, as well as a solid state thin film electrolyte.

It is therefore an object of this invention to provide novel polymeric membranes which are useful in gas separation devices.

A further object of this invention is to provide a method for preparing polymer-blend membranes of a type hereinafter set forth in greater details, said membranes being utilized in gas separation devices.

An embodiment of this invention provides a thin-film polymer-blend membrane which comprises a blend of an inorganic compound and an organic polymer which is compatible with said inorganic compound.

According to the invention, the inorganic compound is selected from heteropoly acids and salts thereof, phosphoric acids, and sulfuric acids, and the organic polymer is selected from poly(vinyl alcohol), poly(vinyl fluoride), polyethylene oxide, polyethyleneimine, polyacrylic acid, polyethylene glycol, cellulose acetate, polyvinylmethylethyl ether and phenol formaldehyde resins.

Another embodiment of this invention is found in a method for the preparation of the thin-film polymer-blend membrane which comprises dissolving the inorganic compound and the organic polymer in a mutually miscible solvent at solution conditions for a period of time sufficient to form a blend, casting said blend on a casting surface, removing said solvent and recovering the resultant thin film membrane.

The invention also provides a hydrogen-sensing or hydrogen-separating device including a membrane, metal electrodes on both surfaces of said membrane, and means for supplying a hydrogen-containing gas to at least one surface of the membrane, characterized in that the membrane is a polymer-blend membrane as defined above.

A specific embodiment of this invention resides in a thin film polymer-blend membrane which comprises a blend of poly(vinyl alcohol) and dodecamolybdophosphoric acid, said polymer being present in an amount from 99 to 30% by weight of said blend and said acid being present in an amount from 1 to 70% by weight of said blend.

Another specific embodiment of this invention is found in a method for the preparation of a thin-film polymer-blend membrane which comprises dissolving dodecamolybdophosphoric acid and poly(vinyl alcohol) in water at a temperature in the range of from ambient to 100°C for a period of time sufficient to form a blend, casting said blend on a casting surface, removing said water by evaporation, and recovering the resultant thin film membrane.

Other objects and embodiments will be found in the following further detailed description of the present invention.

As hereinbefore set forth, the present invention is concerned with polymer blended membranes comprising a thin-film organic-inorganic blend and to a method for the preparation thereof. As was previously discussed, when attempting to blend an organic polymer with an inorganic compound, the usual result is to obtain a phase separation. In contradistinction to this, we have discovered that a single phase system may be obtained by admixing certain organic polymeric compounds with inorganic compounds selected from the group consisting of heteropoly acids or salts thereof, phosphoric acid or sulfuric acid, the resulting composition of matter forming a thin film membrane which may be utilized in gas separation systems. The use of these membranes in gas separation devices is due in some respect to the fact that these inorganic compounds possess a high protonic conductivity, especially at room or ambient temperature. The membranes which are formed from the blend of the organic polymer and the inorganic compound possess excellent transport properties as well as an increase in tensile strength over those membranes prepared from pure organic polymers. The physical properties which these thin film membranes exhibit thus provide an attractive base for their use as gas sensors, especially in the case of hydrogen, or as gas separation membranes. As will hereinafter be shown in greater detail, the organic-inorganic blends possess chemical, mechanical and electrical properties which indicate the two materials form a single phase system. For example, the blends possess only one glass transition temperature which indicates a single phase system inasmuch as, if the resulting membranes were a two-phase system, or merely a physical mixture, the composition would possess two separate and distinct glass transition temperatures. In addition, the yield strength and modulus is greatly increased over those properties which are posessed by either of the two components. Another physical characteristic which indicates a single phase or true composition of matter is that the blend is transparent to visible light as well as being uniform in colour.

The desired membrane comprises a blend of an organic polymer and an inorganic compound selected from the group consisting of heteropoly acid or salt thereof or a phosphoric acid or a sulfuric acid, the polymer being compatible with the inorganic compound. The organic polymers which may be employed as one component of the blend of the present invention are poly(vinyl alcohol), poly(vinyl fluoride), polyethylene oxide, polyethyleneimine, polyacrylic acid, polyethylene glycol, cellulose acetate, polyvinylmethylethyl ether and phenol formaldehyde resins.

Examples of heteropoly acids or salts thereof which may be employed as the second component of the organic-inorganic blend which may be used to form a membrane will possess the generic formula:

$$A_m(X_xY_yO_z) \;.\; nH_2O$$

in which X is selected from the group consisting of boron, aluminum, gallium, silicon, germanium, tin, phosphorus, arsenic, antimony, bismuth, selenium, tellurium, iodine, and metals of the first, second, third and fourth transitional metal series of the Periodic Table and where Y is dissimilar from X and is selected from at least one metal of the first, second, third and fourth transitional metal series of the Periodic Table, A is selected from the group consisting of hydrogen, ammonium, sodium, potassium, lithium, rubidium, cesium, beryllium, magnesium, calcium, strontium and barium, m is 1 to 10, y is from 6 to 12 based on x being equal to 1, z is 30 to 80 and n is 3 to 100.

Specific examples of these compounds will include dodecamolybdophosphoric acid, ammonium molybdophosphate, sodium molybodophosphate, potassium molybdophosphate, lithium molybdophosphate, calcium molybdophosphate, magnesium molybdophosphate, dodecatungstophosphoric acid, ammonium tungstophosphate, sodium tungstophosphate, potassium tungstophosphate, lithium tungstophosphate, calcium tungstophosphate, magnesium tungstophosphate, dodecamolybdosilicic acid, ammonium molybdosilicate, sodium molybdosilicate, potassium molybdosilicate, lithium molybdosilicate, calcium molybdosilicate, magnesium molybdosilicate, dodecamolybdogermanic acid, ammonium molybdogermanate, sodium molybdogermanate, potassium molybdogermanate, lithium molybdogermanate, calcium molybdogermanate, magnesium molybdogermanate, hexamolybdotelluric acid, ammonium molybdotellurate, sodium molybdotellurate, potassium molybdotellurate, lithium molybdotellurate, calcium molybdotellurate, magnesium molybdotellurate, dodecatungstosilicic acid, ammonium tungstosilicate, sodium tungstosilicate, potassium tungstosilicate, lithium tungstosilicate, calcium tungstosilicate, magnesium tungstosilicate, etc. It is also contemplated within the scope of this invention that some uranyl compounds may also be employed as the heteropoly acid or salt thereof. These uranyl compounds will possess the generic formula:

$$A[UO_2]XO_4 \;.\; nH_2O$$

in which A is selected from the group consisting of hydrogen, lithium, sodium, potassium. ammonium, copper, magnesium, calcium, barium, strontium, lead, iron cobalt, nickel, manganese, and aluminum, X is selected from the group consisting of phosphorus and arsenic and n is an integer of from 1 to 4. Some specific examples of these uranyl compounds will include uranyl orthophosphate, uranyl orthoarsenate, lithium uranylphosphate, lithium uranylarsenate, sodium uranylphosphate, sodium uranylarsenate, potassium uranylphosphate, potassium uranylarsenate, ammonium uranylphosphate, ammonium uranylarsenate, calcium uranylphosphate, calcium uranylarsenate, barium uranylphosphate, barium uranylarsenate, copper uranylphosphate, copper uranylarsenate, iron uranylphosphate, iron uranylarsenate, cobalt uranylphosphate, cobalt uranylarsenate, nickel uranylphosphate, nickel uranylarsenate, etc.

The other component of the organic-inorganic blend will comprise phosphoric acid or sulfuric acid. Examples of phosphoric acids which may be employed will include hypophosphoric acid, metaphosphoric acid, orthophosphoric acid, pyrophosphoric acid, polyphosphoric acid; or aqueous sulfuric acid, which may be present in an amount in the range of from 10% to 40% of sulfuric acid in the aqueous solution.

The novel compositions of matter of the present invention are prepared by admixing the two components of the blend in a mutually miscible solvent at solution conditions for a period of time sufficient to form the desired blend. In the preferred embodiment of the invention the mutually miscible solvent which is employed to dissolve the components comprises water, although it is contemplated within the scope of this invention that any other mutually miscible solvent, either inorganic or organic in nature may also be employed. The mixing of the two components of the composition of matter may be effected at solution conditions which will include a temperature in the range of from ambient (20°—25°C) up to the boiling point of the mutually miscible solvent which, for example, in the case of water is 100°C. The time of reaction which is necessary to form the desired blend will vary with the particular organic polymers and heteropoly acids or salts thereof as well as the solvent and may be within a period of time ranging from 0.5 up to 10 hours or more in duration. Upon completion of the reaction period, the blend is cast upon a suitable casting surface which may consist of any suitable material sufficiently smooth in nature so as to provide a surface free of any defects which may cause imperfections on the surface of the membrane. Examples of suitable casting surfaces may include metals such as stainless steel, aluminum, etc., glass, polymer or ceramics. After casting the solution upon the surface, the solvent is then removed by any conventional means including natural evaporation or forced evaporation by the application of elevated temperatures whereby said solvent is evaporated and the desired membrane comprising a thin film of the polymeric blend is formed. In the preferred embodiment of the invention, the polymeric blend of an organic-inorganic compound will possess a molecular weight ranging from 2000 up to 135,000 and preferably greater than 10,000. The thickness of the film can be controlled by the amount of inorganic compound and/or the organic polymer which is present in the solution mixture. In this respect, it is to be noted that the ratio of inorganic compound and organic polymer may vary over a relatively wide range. For example, the inorganic compound may be present in the blend in a range of from 1% to 70% by weight of the blend while the organic polymer may be present in an amount in the range of from 99% to 30% by weight of the blend. The thin film organic-inorganic blend which is prepared according to the process of the present invention will possess a thickness which may range from 0.1 to 50 μm and preferably from 5 to 20 μm.

The polymer blend membranes of the present invention may be prepared by placing a predetermined amount of each of the components of the blend, namely, the organic polymer and the inorganic compound, in an appropriate apparatus such as a flask. After adding the mutually miscible solvent, the mixture is allowed to remain, after thorough admixing thereof, for a predetermined period of time within the range hereinbefore set forth. As an example, poly(vinyl alcohol) and dodecamolybdophosphoric acid may be placed in a flask and dissolved in water which has been heated to 100°C. Upon completion of the desired residence time, the solution is cast upon an appropriate casting surface and the water or other solvent is removed. The desired and resulting polymer blend membrane is then recovered and utilized in an appropriate gas separation apparatus or gas sensor apparatus.

Examples of novel thin film organic-inorganic polymer blends which may be prepared according to the process of this invention will include poly(vinyl alcohol)-dodecamolybdophosphoric acid, poly(vinyl fluoride)-dodecamolybdophosphoric acid, cellulose acetate-dodecamolybdophosphoric acid, polyethylene oxide-dodecamolybdophosphoric acid, polyethylene glycol-dodecamolybdophosphoric acid, poly(vinyl alcohol)-dodecatungstophosphoric acid, poly(vinyl fluoride)-dodecatungstophosphoric acid, cellulose acetate-dodecatungstophosphoric acid, polyethylene oxide-dodecatungstophosphoric acid, polyethylene glyco-dodecatungstophosphoric acid, poly(vinyl alcohol)-dodecamolybdosilicic acid, poly(vinyl fluoride)-dodecamolybdosilicic acid, cellulose acetate-dodecamolybdosilicic acid, polyethylene oxide-dodecamolybdosilicic acid, polyethylene glycol-dodecamolybdosilicic acid, poly(vinyl alcohol)-ammonium molybdophosphate, poly(vinyl fluoride)-ammonium molybdophosphate, cellulose acetate-ammonium molybdophosphate, polyethylene oxide-ammonium molybdophosphate, polyethylene glycol-ammonium molybdophosphate, poly(vinyl alcohol)-uranyl orthophosphate, poly(vinyl fluoride)-uranyl orthophosphate, cellulose acetate-uranyl orthophosphate, polyethylene oxide uranyl orthophosphate, polyethylene glycol-uranyl orthophosphate, poly(vinyl alcohol)-orthophosphoric acid, poly(vinyl fluoride)-orthophosphoric acid, cellulose acetate-orthophosphoric acid, polyethylene oxide-orthophosphoric acid, polyethylene glycol-orthophosphoric acid, poly(vinyl alcohol)-pyrophosphoric acid, poly(vinyl fluoride)-pyrophosphoric acid, cellulose acetate-pyrophosphoric acid, polyethylene oxide-pyrophosphoric acid, polyethylene glycol-pyrophosphoric acid, poly(vinyl alcohol)-metaphosphoric acid, poly(vinyl fluoride)-metaphosphoric acid, polyethylene oxide-metaphosphoric acid, polyethylene glycol-metaphosphoric acid, poly(vinyl alcohol)-sulfuric acid, poly(vinyl fluoride)-sulfuric acid, cellulose acetate-sulfuric acid, polyethylene oxide-sulfuric acid, polyethylene glycol-sulfuric acid, etc.

As a further refinement in the invention, it may be desirable to composite the polymer blend membrane on a porous support for increased structural strength. Upon completion of the reaction period to which we have referred the blend is cast upon a suitable surface, which in the case of a supported membrane will be a porous support. The porous support which is employed to increase the structural strength of the membrane will comprise a compound which possesses a porosity equal to or greater than the porosity of the thin film inorganic-organic blend. It is contemplated within the scope of this invention that any relatively open-celled form or porous substrate which possesses a structural strength greater than the thin film membrane may be employed. Some examples of these porous supports will include compounds such as glass cloth, polysulfone, cellulose acetate, polyamides, etc. The amount of blend which is cast upon the porous support will be that which is sufficient to form a thin film membrane having a thickness within the range previously set forth. After casting, the mutually miscible solvent such as water is removed by conventional means such as normal evaporation or forced evaporation by the application of external heat, application of vacuum, etc., and the desired membrane comprising the thin film blend composited on the porous support may be recovered and utilized in an appropriate gas separation apparatus or gas sensor apparatus.

The increased strength membranes which are prepared according to the process of this invention will possess a relatively greater structural support, thereby enabling the membranes to be produced and handled in a more efficient manner. The aforesaid membranes may be used for either hydrogen sensing or for the separation of gases. The desired device may be prepared by forming the structurally supported membrane and thereafter depositing the conductive metal required for the device on each surface of the membrane. For example, a conductive metal such as platinum, palladium, nickel, copper, etc. may be sputter deposited on the surfaces in such an amount so that the electrode material possesses a thickness ranging from 100 to 1000 Angstroms. Following this, the membrane containing the conductive material on both sides thereof may be placed in a desired holder and electrical contact may be made to the electrode and counterelectrode. The sputter deposition which may comprise one method of depositing the conductive material on the membrane may be effected by placing the polymer blended membrane composited on a porous support in a sputter deposition chamber and subjecting the same to the sputter deposition of the conductive metal thereon until the desired thickness of said conductive metal has been attained. In addition, it is also contemplated that the desired conductive metal may be deposited on both surfaces of the membrane composition by any other means known in the art such as impregnation, etc.

Therefore, the invention also encompasses in a hydrogen sensing or hydrogen separating device including a membrane, metal electrodes on both surfaces of said membrane, and means to supply a hydrogen containing gas to at least one surface of the membrane, the improvement wherein the membrane is a thin-film polymer blend membrane which comprises a blend of an inorganic compound selected from the group consisting of heteropoly acids and salts thereof, phosphorus acids and sulfuric acid and an organic polymer which is compatible with said inorganic compound.

It may be desirable to admix electrically conductive particles with the polymer blended composition of matter formed by admixing a heteropoly acid or a salt thereof with an organic polymer which is compatible with said heteropoly acid or salt. The electrically conductive particles will possess the desirable characteristics of being able to catalyze the dissociation of certain gaseous elements, that is, the ability to transmit electrons through the particle from one surface thereof to a second surface thereof.

The electrically conductive particles which are admixed with the blend will possess the ability to catalyze the dissociation of certain gaseous elements, mainly hydrogen, although it is also contemplated that gaseous hydrocarbons such as methane, ethane, propane, etc. may also undergo dissociation when subjected to the action of these particles. In the preferred embodiment of the invention the electrically conductive particles will comprise metals of Group VIII of the Periodic Table or alloys of these metals, either with themselves or with other metals. Especially preferred are the metals such as platinum, palladium, ruthenium or nickel or alloys such as platinum-nickel, palladium-nickel, copper-nickel, ruthenium-nickel, etc. The electrically conductive particles may consist of these metals per se in their elemental state or the metals may be deposited on a solid support which itself may possess some electrically conductive properties. An example of this type of electrically conductive support comprises a solid composite comprising at least a monolayer of a carbonaceous pyropolymeric structure comprising recurring units containing at least carbon and hydrogen atoms on the surface of a substrate which itself comprises a high surface area refractory inorganic oxide. This high surface area refractory inorganic oxide will possess a surface area in the range of from 1 to 500 $m^2/g$ and will include refractory oxides such as alumina in various forms including gamma-alumina, beta-alumina, theta-alumina or mixtures of inorganic refractory oxides such as silica-alumina, silica-zirconia, zirconia-titania, zirconia-alumina, zeolites, etc. The shape of the inorganic support upon which the carbonaceous pyropolymer is deposited can be in any form desired and may be obtained by any method known in the art such as marumerizing, pelletizing, nodulizing, etc.

In one method of preparing the composite, the inorganic support is heated to a temperature of from

400° to 1200°C in a reducing atmosphere containing an organic pyrolyzable compound. The organic pyropolymer precursors most commonly and preferably used are compounds of the group consisting of aliphatic hydrocarbons such as alkanes including ethane, propane, butane, etc.; alkenes including ethylene, propylene, the isomeric butylenes; alkynes such as ethyne, propyne, 1-butyne, etc; aliphatic halogen derivatives such as chloromethane, bromomethane, carbon tetrachloride, chloroform, etc.; aliphatic oxygen derivatives such as methanol, ethanol, propanol, glycol, ethyl ether, formic acid, acetic acid, acetone, formaldehyde, etc.; aliphatic sulfur derivatives such as methyl mercaptan, ethyl mercaptan, *n*-propyl mercaptan, etc.; aliphatic nitrogen derivatives such as nitroethane, nitropropane, acetamide, dimethylamine, etc.; alicyclic compounds such as cyclohexane, cycloheptane, cyclohexene, etc.; aromatic compounds such as benzene, toluene, benzyl chloride, anisole, benzaldehyde, acetophenone, phenone, benzoic acid, etc.; and heterocyclic compounds such as furan, pyran, coumarin, etc. As can be seen, an extremely wide latitude can be exercised in the selection of the organic pyrolyzable substances, since virtually any organic material that can be vaporized, decomposed and polymerized on the refractory oxide upon heating will suffice. The resultant carbonaceous pyropolymer will possess recurring units containing at least carbon and hydrogen atoms; however, depending upon the pyropolymer precursor which has been selected, the pyropolymer may also contain other atoms such as nitrogen, oxygen, sulfur or metals such as an organometallic compound have been used as the pyropolymer precursor.

In another embodiment, the composite may be prepared by impregnating the refractory inorganic oxide substrate with a solution of a carbohydrate material such as dextrose, sucrose, fructose, starch, etc., and therefore drying the impregnated support. After drying, the impregnated support is then subjected to pyrolysis temperatures within the range hereinbefore set forth whereby a carbonaceous pyropolymer similar in nature to those hereinbefore described is formed in at least a monolayer on the surface of the refractory inorganic oxide support.

The support thus formed may then be impregnated with solutions or cosolutions of the metal of Group VIII of the Periodic Table to provide the desired electrically conductive particles. After obtaining the desired particle size, the thickness of which will hereinafter be set forth in greater detail by any means known in the art such as grinding, pulverizing, etc. whereby the support is formed in the desired particle size, the impregnation may be effected by treating the support with an aqueous or organic solution of the desired metal to deposit said metal on the surface of the carbonaceous pyropolymer support. The solution which is utilized to impregnate the carbonaceous pyropolymer support is preferably aqueous in nature, some specific examples of these aqueous solutions being chloroplatinic acid, chloroplatinous acid, bromoplatinic acid, platinic chloride, platinous chloride, as well as corresponding solutions of palladium, ruthenium, nickel, etc. After impregnation of the structure, the solvent may be removed by heating to a temperature in the range of from 100° to 400°C depending upon the nature of the particular solvent in which the metal compound is dissolved, said temperature being that which is sufficient to evaporate the solvent and leave the metal impregnated on the surface of the carbonaceous pyropolymer structure. Thereafter, the structure may then be dried at elevated temperatures ranging from 100° to 200°C for a period of time ranging from about two to about six hours or more. Following this, the metal impregnated carbonaceous pyropolymer support may then be subjected to a reducing step in the presence of a reducing atmosphere or medium such as hydrogen at elevated temperatures of from 200° to 600°C or more for a period of time ranging from 0.5 to four hours or more whereby the metallic compound is reduced to the elemental metal stage.

The size of the electrically conductive particles which are to be admixed with the polymeric blend hereinbefore described will be of a sufficient magnitude so that when forming the thin film membrane, which said particles form an integral portion, the surfaces of said particles will be coexistent with or extend beyond the surfaces of the thin film polymer blend which forms another integral portion of the membrane. As hereinbefore set forth, the thickness of the thin film membrane will range from 0.1 to 50 µm and preferably from 5 to 20 µm. Therefore, the thickness of the metal or metal-coated particles should range from 0.5 to 55 µm.

The novel thin film organic-inorganic membrane of the present invention may be prepared by admixing the two components of the blend, that is, the heteropoly acid or salt thereof and the polymer compound which is at least partially compatible with said acid or salt, in a mutually miscible solvent at solution conditions for a period of time sufficient to form the desired blend. In the preferred embodiment of the invention, the mutually miscible solvent which is employed to dissolve the components therein comprises water, although it is also contemplated within the scope of this invention that any other mutually miscible solvent either organic or inorganic in nature may also be employed. The admixing of the two components of the blend may be effected at solution conditions which will include a temperature in the range of from ambient (20°—25°C) up to the boiling point of the mutually miscible solvent which, for example, in the case of water is 100°C. The electrically conductive particles are added to the solution and the solution is subjected to a thorough admixing by any means such as stirring, shaking, rotating, etc. In addition, in the preferred embodiment of the invention, a dispersing agent of any type well known in the art may also be added to the solution to ensure that the particles do not tend to clump together or agglomerate, but will be uniformly dispersed through the solution. The time of reaction which is necessary to form the desired blend will vary with the particular organic polymers and heteropoly acids or salts thereof as well as the solvent and may be within a period of time ranging from 0.5 up to 10 hours or more in duration. Upon completion of the reaction period, the blend may then be cast upon a suitable casting

surface which may consist of any suitable material possessing the desired properties so as to provide a surface free of any defects which may cause any imperfections on the surfaces of the membrane. Examples of suitable casting surfaces which may be employed may include metals such as stainless steel, aluminum, etc. glass, ceramics or polymers. After casting the solution upon the surface, the solvent may then be removed by any conventional means including natural evaporation or forced evaporation by the application of elevated temperatures to the casting surface whereby said solvent is evaporated and the desired membrane, comprising a thin film of the polymeric blend containing the electrically conductive particles uniformly dispersed therethrough, is formed. Alternatively, the membrane may also be formed by reprecipitation of the solution in a nonsolvent. Examples of nonsolvents which may be employed in the reprecipitation of the blend will include lower alcohols such as methanol, ethanol, propanol, etc.; paraffinic hydrocarbons such as pentane, hexane, heptane, etc.; chlorinated hydrocarbons such as chloroform, bromoform, carbon tetrachloride, dichlorobenzene, methylene chloride, etc.; ketones such as acetone, methyl ethyl ketone, methyl propyl ketone, etc.; carboxylic acids such as formic acid, acetic acid, propionic acid, trichloroacetic acid, etc.; esters such as methyl acetate, ethyl acetate, methyl acrylate, methyl methacrylate, etc.; tetrahydrofuran, etc.; as well as concentrated aqueous salt solutions. It is to be understood that the particular nonsolvent which is employed will be dependent upon the particular polymer and heteropoly acid or salt thereof which is being blended to form the desired inorganic-organic polymer blend.

As an alternative method of preparing the membrane of the present invention, the heteropoly acid or salt thereof and the organic polymer may be admixed in a manner similar to that hereinbefore set forth as solution conditions and allowed to react for a period of time necessary to form the desired blend. The blend may then be cast upon a suitable casting surface and the electrically conductive particles may then be added to the blend upon the casting surface in such a manner as to ensure an even and uniform distribution of the particles throughout the blend. Following this, the solvent is then allowed to evaporate and the resulting membrane recovered. The solvent may also be removed by reprecipitation of the solution in a nonsolvent of the type hereinbefore set forth.

As a specific example of a method for preparing the membranes of the present invention, a predetermined amount of each of the components of the blend, namely the organic polymer and the heteropoly acid or salt, is placed in an appropriate apparatus such as a flask. After heating of the mutually miscible solvent and dissolution of the components of the blend has been accomplished, the particles of the electrically conductive material of the type hereinbefore set forth may be added, and after thorough admixing thereof, the mixture is allowed to remain for the period of time necessary to accomplish a blend and thereafter cast upon an appropriate casting surface. As a more specific example, poly(vinyl alcohol) and dodecamolybdophosphoric acid may be placed in a flask and dissolved in water which has been heated to a temperature of 100°C. Thereafter particles of an electrically conductive material such as platinum composited on the surface of a solid support comprising at least a monolayer of a carbonaceous pyropolymeric structure comprising recurring units containing at least carbon and hydrogen atoms on the surface of a substrate which itself comprises a high surface area refractory inorganic oxide may be added and the solution thoroughly admixed by shaking. Upon completion of the desired residence time, the solution is cast upon an appropriate casting surface such as glass and the water is removed. The resulting polymer blend membrane containing the electrically conductive particles which form a portion of the membrane and whose surfaces are co-existent or extend beyond the surfaces of the polymer blend is then recovered and utilized in an appropriate gas separation apparatus or gas sensor apparatus.

The membranes comprising a blend of a heteropoly acid or salt thereof and an organic polymer which contains the electrically conductive particles, the surfaces of which are coexistent with or extend beyond the surfaces of the blend may be utilized as a flat surface or in a tubular form. The tubing which comprises the polymer blend containing the electrically conductive particles may be fabricated by forcing a solution through a die while making provision for maintaining a hollow core. When this type of construction is desired, the electrically conducting particles may be added to the solution before the tube is formed, one surface of each particle being exposed to the interior of the tubing while a second surface of the particle which is in common with the external surface of the tubing is coexistent therewith or extends beyond. The size of the tube which is formed may vary over a relatively wide range, the wall thickness of the tubing varying depending upon the application.

The following examples are given for purposes of illustrating the novel membranes of the present invention as well as to a method for the manufacture thereof.

### Example I

A novel polymer blend membrane was prepared by dissolving poly(vinyl alcohol) and dodecamolybdophosphoric acid in boiling deionized water, the amount of organic polymer and heteropoly acid being sufficient to impart a 50/50 weight percent ratio to the resulting polymer blend membrane. The solution was then poured into an evaporation dish and the water was allowed to evaporate for a period of 16 hours. The resulting blended film was yellow-green in color and possessed a thickness of 20 μm.

The thin film membrane was cut into a disc having a 1″ (2.54 cm) diameter and electrodes were sputter-dispersed onto both sides of the disc. The electrode material which comprised platinum had a thickness ranging from 100 to 200 Angstroms with a diameter of about 1.2 cm. Following this, the film was placed

into a Teflon holder and electrical contact was made to the electrodes through copper plates. On one side of the membrane, a hydrogen pressure of 1 atmosphere (0.101 MPa) was maintained while exposing the working electrode to hydrogen, containing a sufficient amount of water in the form of water vapor so as to maintain a relative humidity of at least 30%, at a hydrogen partial pressure of 0.02 atmospheres (0.00202 MPa). The results of this test showed a hydrogen flux of $1.46 \times 10^{-3}$ $ft^3/ft^2$-hr. (0.000445 $m^3/m^2$-hr) and a current as measured in milliamps of $1.337 \times 10^{-1}$.

In addition, various analyses of the film were performed to determine whether or not the film was single phase or two-phase. The blended film was found to be optically transparent, and no phase separation was observed when the film was examined with an optical microscope or SEM. The specimen was also subjected to a glass transition temperature measurement inasmuch as the measurement of the glass transition temperature, or temperatures of a polymer blend is the most commonly used criteria for determining the number of phases present in a blend. For example, a single phase organic-inorganic blend will exhibit a single glass transition temperature between the temperatures of the components, while in a two-phase system, two separate temperatures will result. Poly(vinyl alcohol) has a known glass transition temperature of 71°C, while the melting point temperature of dodecamolybdophosphoric acid is 84°C. A DSC scan of the film prepared according to the above paragraphs had a peak of 78°C while no peaks were observed at temperatures corresponding to the glass transition temperatures of poly(vinyl alcohol) or the melting point of dodecamolybdophosporic acid.

Infra-red spectroscopy of the film showed four strong bands appearing at 820 $cm^{-1}$, 885 $cm^{-1}$, 972 $cm^{-1}$, and 1075 $cm^{-1}$. The indication from this analysis is that the bands are associated with intermolecular bonding between the poly(vinyl alcohol) and the dodecamolybdophosphoric acid. In addition to these analyses, it was found that the blended film possessed increased tensile strength and modulus over that which is possessed by either poly(vinyl alcohol) or dodecamolybdophosphoric acid, the increase in tensile strength and modulus perhaps being the result of increased hydrogen bonding due to the formaton of a single phase material.

## Example II

Additional organic polymer-heteropoly acid blend membranes were preared utilizing a manner similar to that set forth in Example I above. The different membranes were prepared utilizing various poly(vinyl alcohol) (PVA)/dodecamolybdophosphoric acid (DMPA) loadings. The fabricated films contained loadings of 90% PVA/10% DMPA, 75% PVA/25% DMPA and 40% PVA/60% DMPA and were labeled A, B and C respectively. Each of the films possessed a thickness of 20 µm and after recovery were cut into 1" (2.54 cm) diameter discs. The electrodes comprising platinum were sputter dispersed onto both sides of the disc to a thickness of 10 mm. The electrode-membrane composite was then utilized in a manner similar to that set forth in Example I above in a gas separation apparatus under a hydrogen partial pressure, obtained by mixing hydrogen, containing a sufficient amount of water in the form of water vapor so as to maintain a relative humidity of at least 30%, with either helium or nitrogen, of 0.02 atmospheres (0.00202 MPa). The hydrogen flux through the blended membranes was effected at room temperature with the following results in wich I(ma) is the current:

| MEMBRANE | I(ma) | FLUX ($ft^3/ft^2$-hr.) | ($m^3/m^2$-hr) |
|---|---|---|---|
| A | $5 \times 10^{-4}$ | $5.6 \times 10^{-6}$ | $1.71 \times 10^{-6}$ |
| B | $3.1 \times 10^{-2}$ | $3.39 \times 10^{-4}$ | $1.03 \times 10^{-4}$ |
| C | $1.337 \times 10^{-1}$ | $1.46 \times 10^{-3}$ | $0.45 \times 10^{-3}$ |

## Example III

In a manner similar to that set forth in Example I above, other organic-inorganic membranes may be prepared by blending poly(vinyl alcohol) with dodecatungstophosphoric acid, cellulose acetate and dodecamolybdophosphoric acid, poly(vinyl alcohol) and uranyl orthophosphate, and poly(vinyl alcohol) and ammonium phosphomolybdate. The resulting membranes may then be treated by sputter depositing platinum cr palladium on both sides of said membrane to a thickness of from 10 to 20 nm and the resulting composite utilized in a gas separation apparatus to separate hydrogen from a gas stream consisting of hydrogen and other inert gases such as helium or nitrogen.

## Example IV

A novel polymer blend thin film membrane of the present invention was prepared by dissolving 0.25 gram of poly(vinyl alcohol) and 0.1 mL of 18M orthophosphoric acid in boiling deionized water, the amount of poly(vinyl alcohol) and orthophosphoric acid being sufficient to impart a 60/40 wt. % ratio to the resulting polymer blend membrane. The solution was then poured into an evaporating dish and the water was allowed to evaporate for a period of 18 hours. The resulting film was transparent and possessed a thickness of 20 µm. The thin film membrane was cut into a disc having a 1" (2.54 cm) diameter and platinum electrodes were sputter-dispersed onto both sides of the disk. The electrode material had a thickness ranging from 20 to 100 nm with a diameter of about 1 cm. The membrane was then placed into a Teflon holder and electrical contact was made with the electrodes through copper plate. On one side of the

membrane the hydrogen pressure of 1 atmosphere (0.101 MPa) was maintained while exposing the working electrode to hydrogen. The results of this test showed a hydrogen flux of about $10^{-3}$ cubic feet per square feet per hour ($3.05 \times 10^{-4}$ cubic meters per square meter per hour) and a current density, as measured in milliamps, of $3 \times 10^{-6}$ A/cm$^2$.

In addition, various analyses of the film showed that the film was a single phase rather than two-phase. The blended film was found to be optically transparent and no phase separation was observed when the film was examined with an optical microscope or SEM. The specimen was also subjected to glass transition temperature measurements inasmuch as the measurement of the glass transition temperature, or temperatures of a polymer blend, is the most commonly used criteria for determining the number of phases present in a blend. For example, a single phase organic-inorganic blend will exhibit a single glass transition temperature between the temperature of the components, while in a two-phase system, two separate temperatures will result. Poly(vinyl alcohol) has a known glass transition temperature of 71°C while the boiling temperature or orthophosphoric acid is 213°C. A DSC scan of the film prepared according to the above paragraphs had a peak of 75°C while no peaks were observed at temperatures corresponding to the glass transition temperature of poly(vinyl alcohol) and the boiling point of orthophosphoric acid.

Infrared spectroscopy of the film showed strong bands appearing at 2400 cm$^{-1}$, 1020 cm$^{-1}$, 700 cm$^{-1}$ and 500 cm$^{-1}$. The indication from this analysis is that the bands are associated with intermolecular bonding between the poly(vinyl alcohol) and the orthophosphoric acid. In addition to these analyses, it was found that the blended film possessed increased tensile strength and modulus over that which is possessed by either poly(vinyl alcohol) or othophosphoric acid, the increase in tensile strength and modulus perhaps being the result of increased hydrogen boiling due to the formation of a single phase material.

Example V

An organic polymer phosphoric acid blend membrane was prepared utilizing a manner similar to that set forth above. The film membrane which contained a 60/40 wt.% blend of poly(vinyl alcohol) and orthophosphoric acid possessed a thickness of 20 μm and were cut into 1″ (2.54 cm) diameter discs. Electrodes comprising platinum were sputter dispersed onto both sides of the disc to a thickness of 40 nm. The membrane was then placed in a similar Teflon cell being positioned in the middle of the cell to render the two sides of the cell air-tight. A reference gas consisting of 100% hydrogen and a working gas comprising 9.987% hydrogen and 90.013% nitrogen were placed on each side of the cell. The gases were continuously flushed through the cell, the output EMF of 29.4 millivolts was generated. This compared to an output of EMF of 0 millivolts when pure hydrogen is present on both sides of the membrane. In addition, the resistance of the memberane was about $10^4$.

Example VI

Similar polymer blend membranes may be prepared by admixing other organic polymers such as cellulose acetate or poly(vinyl alcohol) with sulfuric acid to form the desired thin film polymer blend membranes which are similar to the membranes described in Examples IV and V above and which may possess similar properties.

Example VII

A polymer blend membrane was prepared by dissolving poly(vinyl alcohol) and uranyl orthophosphate in boiling deionized water, the amount of organic polymer and salt of a heteropoly acid being sufficient to impart a 50/50 wt.% ratio to the resulting polymer blend. The solution was filtered and poured onto the top of a fine glass cloth which was positioned in a standard Petrie dish. The water was allowed to evaporate for a period of 48 hours and the resulting membrane composite comprising a thin film membrane composited on the porous support was recovered.

Example VIII

In a manner similar to that hereinbefore set forth, a polymer blend may be prepared by dissolving poly(vinyl alcohol) and dodecamolybdophosphoric acid in deionized water at a temperature of 100°C. The resulting solution may then be poured onto the surface of a porous support comprising polysulfone in an amount sufficient so that after evaporation of the water, the polymer blend membrane will possess a thickness of 50 μm. The membrane composite comprising the polymer blend on the polysulfone may then be recovered and utilized in a hydrogen sensing device.

Example IX

In this example a polymer blended membrane may be prepared by dissolving dodecamolybdophosphoric acid and cellulose acetate in boiling water, the amounts of said polymer and acid being sufficient so that the finished polymer blend will contain a 50/50 wt.% ratio of the two components. Following this, the solution may then be poured onto the surface of a glass cloth and after allowing the water to evaporate, the membrane composite may then be recovered.

A membrane composite possessing increased structural strength may be prepared by dissolving equal molecular weights of dodecatungstophosphoric acid and poly(vinyl alcohol) in boiling deionized water accompanied by thorough admixing thereof. The resulting solution may then be poured onto the surface of

a porous support comprising polysulfone and after the water has evaporated, the resulting composite may then be recovered.

Example X

To illustrate the gas sensing ability of the composites of the present invention, a polymer blend membrane was prepared according to the method set forth in Example VIII above by dissolving poly(vinyl alcohol) and uranyl orthophosphate in boiling deionized water and casting the solution, after filtering, on the top of a fine glass cloth, the resulting membrane composite after removal of the water contained a 50/50 wt.% ratio of the two components and had a total thickness of 75 µm. The sensor was prepared by cutting the supported membrane into a circle having a 1" (2.54 cm) diameter and platinum electrodes $\frac{1}{2}$" (1.27 cm) in diameter were sputter deposited on each side brane composite on a metal plate having a 2.54 cm (1") square hole in the center thereof, said membrane being held down by a gasket and a metal plate provided with an orifice for the introduction of a gas. Air was forced through the membrane at various pressures for a predetermined period of time to determine the amount of pressure necessary to burst the membrane. The membrane which was supported on a glass cloth was labeled "A" and the unsupported membrane was labeled "B". The results of the burst test are set forth in Table 1 below:

TABLE 1

| A | B |
|---|---|
| 5 lbs. for 1 min. (2.27 kg) | 5 lbs. for 1 min. (2.27 kg) |
| 10 lbs. for 1 min. (4.54 kg) | 10 lbs. for 1 min. (4.54 kg) |
| 15 lbs. for 1 min. (6.81 kg) | 15 lbs. for 1 min. (6.81 kg) |
| 20 lbs. for 1 min. (9.08 kg) | 20 lbs. for 1 min. (9.08 kg) |
| 25 lbs. for 1 min. (11.35 kg) | 25 lbs. for 1 min. (11.35 kg) |
| 30 lbs. for 1 min. (13.62 kg) | 30 lbs. for 1 min. — burst in the (13.62 kg) center of the hole |
| 35 lbs. for 1 min. (15.89 kg) | |
| 40 lbs. for 1 min. (18.16 kg) | |
| 45 lbs. for 1 min. (20.43 kg) | |
| 50 lbs. for 1 min. (22.7 kg) | |
| 55 lbs. for 1 min. — burst-shearing (29.97 kg) along the sides of the hole | |

A similar membrane composite comprising a 50/50 wt.% ratio of uranyl orthophosphate and poly(vinyl alcohol) having a molecular weight of 16,000 was prepared. Membrane composite "C" consisted of this blend composited on a glass cloth while membrane "D" was unsupported. The membranes were subjected to a burst test in an apparatus similar to that previously described, the results of said test being set forth in Table 2 below:

TABLE 2

| C | D |
|---|---|
| (2.27 kg) 5 lbs. for 1 min. | (2.27 kg) lbs. for 1 min. |
| (4.54 kg) 10 lbs. for 1 min. | (4.54 kg) 10 lbs. for 1 min. |
| (6.81 kg) 15 lbs. for 1 min. | (6.81 kg) 15 lbs. for 1 min. — deformed |
| (9.08 kg) 20 lbs. for 1 min. | (9.08 kg) 20 lbs. for 1 min. |
| (11.35 kg) 25 lbs. for 1 min. | (11.35 kg) 25 lbs. for 1 min. — burst in center of hole |
| (13.62 kg) 30 lbs. for 1 min. | |
| (15.89 kg) 35 lbs. for 1 min. | |
| (18.16 kg) 40 lbs. for 1 min. | |
| (20.43 kg) 45 lbs. for 1 min. — burst-shearing along sides of hole | |

It is readily apparent from the results set forth in the above Tables that the polymer blend membrane which was cast on a support possessed a greater structural strength than did the un-supported membrane as evidenced by the greater amount of pressure which was required to break the membrane.

Example XII

A polymer blend membrane was prepared by dissolving 0.5 gram of 16,000 molecular weight poly(vinyl alcohol) and 0.2 ml of orthophosphoric acid in boiling deionized water, the amount of organic polymer and acid being sufficient to impart a 60/40 wt.% ratio to the resulting polymer blend. After a period

of time sufficient to form the blend had passed, the solution was stirred and poured onto the top of a fine glass cloth which was positioned in a standard Petrie dish. The water was allowed to evaporate for a period of 48 hours and the resulting membrane composite comprising a thin film membrane composited on the glass cloth having a thickness of 95 μm was recovered.

Example XIII

In like manner, a polymer blend membrane was prepared by dissolving 0.17 cc of sulfuric acid and 0.5 gram of 16,000 molecular weight poly(vinyl alcohol) in boiling deionized water. After a period of time during which a blend had formed, the solution was poured onto the top of a fine glass cloth positioned in a standard Petrie dish. The water was allowed to evaporate during a period of 48 hours and the resulting membrane composite was recovered.

Example XIV

In a manner similar to that hereinbefore set forth, an inorganic-organic polymer blend may be prepared by dissolving poly(vinyl alcohol) and pyrophosphoric acid in boiling deionized water, the polymer and acid being present in amounts sufficient to impart a 60/40 wt.% ratio to the blend. The solution may then be poured onto the surface of a porous support comprising polysulfone in an amount sufficient so that after evaporation of the water, the polymer blend membrane may possess a thickness of about 50 μm. After evaporation of the water, the membrane composite comprising the polymer blend on the polysulfone may be recovered.

Example XV

In this example, a polymer blend membrane may be prepared by dissolving cellulose acetate and potassium phosphate in boiling deionized water and after a time sufficient to form a blend is allowed to elapse, the solution may be poured onto the surface of a glass cloth. After allowing the water to evaporate for a period of 48 hours, the membrane composite may then be recovered.

In like manner, another polymer blend membrane may also be prepared by dissolving poly(vinyl alcohol) having a molecular weight of 16,000 and ammonium phosphate in boiling deionized water. After thorough admixing, the solution may be allowed to stand for a period of time sufficient to form a polymer blend. Following this, the polymer blend may then be poured onto the surface of a porous support comprising polysulfone and after evaporation of the water is allowed to proceed for a period of 48 hours, the resulting composite may be recovered.

Example XVI

To illustrate the gas sensing ability of the composites of the present invention, a sensor was prepared from the polymer blend membrane prepared according to the method as set forth in the above Example XII. The sensor was prepared by cutting the supported membrane into a circle having an 11" (28 cm) diameter and platinum electrodes ½" (1.27 cm) in diameter were sputter dispersed on each side of the membrane. The membrane was then placed in a circular Teflon cell, said sensor being positioned in the middle of said cell to render the two sides of said cell air-tight. A reference gas consisting of 100% hydrogen and a working gas comprising 91.013% nitrogen and 9.987% hydrogen were placed on each side of the cell. The gases were continuously flushed through the cell, the sensor giving off a voltage ranging from 0 millivolts when hydrogen was present on both sides of the sensor to 29.6 millivolts when the reference gas and working gas were present. The latter voltage compares to a calculated voltage of 29.6 millivolts at a temperature of 25.3°C. In addition, it was found that the resistivity was $0.375 \times 10^5$ ohms. In addition, a membrane prepared according to the method set forth in Example II above was tested in like manner and the sensor was found to give off a voltage similar to the membrane comprising a blend of poly(vinyl alcohol) and orthophosphoric acid, the resistivity being somewhat higher.

Example XVII

As an illustration of the greater structural strength of the polymer blend composited on a porous solid support as exemplified by the blends of the present invention when compared to unsupported membranes, two polymer blend membranes were prepared. The polymer blend was prepared by dissolving 0.5 gram of poly(vinyl alcohol) having a molecular weight of 16,000 and 0.2 ml of orthophosphoric acid in boiling deionized water. The resulting blend was cast onto a glass cloth having a thickness of 30 μm. A second blend was prepared by admixing like proportions of poly(vinyl alcohol) and orthophosphoric acid and casting the resulting blend onto a Petrie dish without a support. After removal of the solvent, the two membranes were recovered.

A burst testing apparatus was prepared by placing the membrane composited on a metal blend having a 1" (2.54 cm) square hole in the center thereof, said membrane being held in place by a gasket and a metal plate provided with an orifice for the introduction of a gas. Air was forced through the membrane at various pressures for a predetermined period of time to determine the amount of pressure necessary to burst the membrane. The membrane was supported on a glass cloth was labeled "A" and the unsupported membrane was labelled "B". The results of the burst test are set forth in Table 1 below:

TABLE 3

| A | B |
|---|---|
| (4.54 kg) 10 lbs/1 min.<br>(6.81 kg) 15 lbs/1 min.<br>(9.08 kg) 20 lbs/1 min.<br>(11.35 kg) 25 lbs/1 min.<br>(13.62 kg) 30 lbs/1 min.<br>(15.89 kg) 35 lbs/1 min. — Burst shearing at the edges of the hole. | (2.27 kg) 5 lbs less than 1 min. — center expanded until it burst in center. |

In addition, another sample of unsupported membrane was placed in the holder and 2 lbs./squ. in. (13.8 kPa) of air was passed over the film . The film expanded into the hole for a distance of about 9 millimeters and held. When the pressure of the air was discontinued, the membrane was removed and it was found that a permanent deformation of the membrane had taken place.

It is readily apparent from the results set forth in the above Table that the polymer blend membrane which was cast on a porous support possessed a greater structural strength than did the unsupported membrane.

Example VIII

A novel polymer blended membrane was prepared by placing 0.25 gram of poly(vinyl alcohol) and 0.25 gram of dodecamolybdophosphoric acid in a flask. Twenty ml of deionized water was placed in the flask which was then heated to a temperature sufficient to dissolve both the polymer and the acid. After a time sufficient to form a blend, the solution was poured into a Petrie dish and cobalt particles were added, the amount of particles added being.sufficient to impart a uniform distribution of particles throughout the film. The water was allowed to evaporate for a period of 16 hours and the resulting membrane which had a thickness of 20 µm was removed. To form a membrane in which the electrically conductive particles possess the ability to form protons, platinum was sputtered on the membrane surface using a conventional sputtering technique, both sides of the membrane being subjected to said sputtering.

Example XIX

In this example, a membrane was prepared using the technique hereinbefore described in Example XVIII above, that is, 0.25 gram of poly(vinyl alcohol) and 0.25 gram of dodecamolybdophosphoric acid being placed in a flask and adding thereto 20 ml of deionized water. The flask was then heated to a temperature sufficient to permit the dissolution of the polymer and the acid and the resulting solution was then poured onto a casting surface comprising a Petrie dish. Following this, electrically conductive particles comprising platinum deposited on a solid support consisting of at least a mono-layer of a carbonaceous pyropolymeric structure comprising recurring units containing at least carbon and hydrogen atoms on the surface of a high surface area alumina substrate were added to the solution in a manner so as to ensure a uniform and even distribution of the particles throughout the polymer blend. After the water had evaporated, the resulting membrane was peeled off the dish and recovered.

Example XX

In a manner similar to that hereinbefore described, equimolecular amounts of uranyl orthophosphate and poly(vinyl alcohol) may be placed in a flask, deionized water may then be added thereto and the flask heated until both the heteropoly acid salt and the polymer are dissolved. Following this, nickel particles may be added to the solution which is thereafter thoroughly admixed to ensure an even distribution of the nickel particles throughout said solution. The resulting mixture may then be cast onto a casting surface and the solvent which comprised water, may be allowed to evaporate. After evaporation of the water, the resulting thin film membrane may then be recovered.

Example XXI

A thin film membrane may be prepared by admixing equal molecular weights of dodecamolybdophosphoric acid and cellulose acetate in a solvent comprising deionized water, the temperature of the water being sufficient to permit the acid and polymer to dissolve therein. The resulting solution may then be cast on a casting surface of a type hereinbefore described and particles of an electrically conducting material comprising elemental ruthenium may then be dispersed in a uniform manner throughout the solution. The water may be allowed to evaporate for a period of 16 hours following which the resulting film may be recovered.

**Claims**

1. A polymer-blend membrane which comprises a blend of an inorganic compound and an organic polymer which is compatible with said inorganic compound, characterized in that the inorganic compound is selected from heteropoly acids and salts thereof, phosphoric acids and sulfuric acid, and the organic polymer is selected from poly(vinyl alcohol), poly(vinyl fluoride), polyethylene oxide, polyethyleneimine, polyacrylic acid, polyethylene glycol, cellulose acetate, polyvinylmethylethyl ether and phenol formaldehyde resins.

2. A membrane according to claim 1, characterized in that the membrane has a thickness of from 0.1 to 50 mm.

3. A membrane according to claim 1 or 2 characterized in that the inorganic compound is present in the blend in an amount from 1 to 70% by weight of the blend, and the organic polymer is present in the blend in an amount from 99 to 30% by weight of the blend.

4. A membrane according to any one of claims 1 to 3 characterized in that it is composited on a porous support for increased structural strength.

5. A membrane according to claim 4 characterized in that the porous support is selected from glass cloth and polysulfone.

6. A membrane according to any one of claims 1 to 5 characterized in that the inorganic compound is selected from heteropoly acids and salts thereof, and the blend contains a multiplicity of electrically conductive particles forming a portion of the membrane, the particles being of a size such that their surfaces are coexistent with or extend beyond the surfaces of the membrane.

7. A membrane according to claim 6 characterized in that the electrically conductive particles possess the ability to form a proton.

8. A membrane according to claim 7 characterized in that the electrically conductive particles comprise a metal of Group VIII of the Periodic Table or an alloy of such metals.

9. A membrane according to claim 8 characterized in that the metal or alloy is deposited on a solid support.

10. A membrane according to claim 9 characterized in that the solid support for the metal or alloy comprises at least a monolayer of a carbonaceous pyropolymer comprising recurring units containing at least carbon and hydrogen atoms composited on the surface of a high surface area refractory inorganic metal oxide.

11. A membrane according to any one of claims 8 to 10, characterized in that the metal or alloy is platinum, palladium or an alloy of platinum and nickel.

12. A membrane according to any one of claims 1 to 11, characterized in that the inorganic compound is selected from heteropoly acids and salts of heteropoly acids hgaving the generic formula:

$$A_m(X_xY_yO_z)\ nH_2O$$

in which X is boron, aluminium, gallium, silicon, germanium, tin, phosphorous, arsenic, antimony, bismuth, selenium, tellurium, iodine or a metal of the first, second, third or fourth transition metal series of the Periodic Table and where Y is different from X and is at least one metal of the first, second, third or fourth transition metal series of the periodic Table, A is hydrogen, ammonium, sodium, potassium, lithium, rubidium, cesium, beryllium, magnesium, calcium, strontium or barium, m is 1 to 10, y is 6 to 12 based on x being equal to l, z is 30 to 80 and n is 3 to 300.

13. A method for the preparation of a polymer-blend membrane according to any one of claims 1 to 12, characterized by dissolving the inorganic compound and the organic polymer in a mutually miscible solvent at solution conditions for a period of time sufficient to form a blend, optionally adding the electrically conductive particles on a casting surface, which is optionally the surface of the porous support, removing the solvent and recovering the resulting membrane, optionally composited on the porous support.

14. A method according to claim 13 characterized in that the solution contains a dispersing agent.

15. A method according to claim 13 or 14 characterized in that the solution conditions include a temperature in the range from ambient to 100°C.

16. A method according to any one of claims 13 to 15 characterized in that the mutually miscible solvent comprises water.

17. A method according to claim 16 characterized in that the removal of the water used as solvent is effected by evaporation.

18. A method according to any one of claims 13 to 16, characterized in that the removal of the solvent is accomplished by reprecipitation in a nonsolvent.

19. A hydrogen-sensing or hydrogen-separting device including a membrane, metal electrodes on both surfaces of said membrane, and means for supplying a hydrogen-containing gas to at least one surface of the membrane, characterized in that the membrane is a polymer-blend membrane according to any one of claims 1 to 12.

**Patentansprüche**

1. Membrane aus einem Polymergemisch bestehend aus einem Gemisch einer anorganischen Verbindung und eines organischen Polymers, welches mit der anorganischen Verbindung verträglich ist, dadurch gekennzeichnet, daß die anorganische Verbindung aus Heteropolysäuren und Salzen hiervon, Phosphorsäuren und Schwefelsäure und das organische Polymer aus Poly(vinylalkohol), Poly(vinylfluorid), Polyethylenoxid, Polyethylenimin, Polyacrylsäure, Polyethylenglykol, Celluloseacetat, Polyvinylmethylethylether und Phenolformaldehydharzen ausgewählt ist.

2. Membrane nach Anspruch 1, dadurch gekennzeichnet, daß die Membrane eine Dicke von 0,1 bis 50 mm hat.

3. Membrane nach Anspruch 1 oder 2, dadurch gekennzeichnet, daß die anorganische Verbindung im Gemisch in einer Menge von 1 bis 70 Gew.-% des Gemisches und das organische Polymer in Gemisch in einer Menge von 99 bis 30 Gew.-% des Gemisches zugegen ist.

4. Membrane nach einem der Ansprüche 1 bis 3, dadurch gekennzeichnet, daß sie mit einem porösen Träger zum Zwecke einer besseren strukturellen Festigkeit verbunden ist.

5. Membrane nach Anspruch 4, dadurch gekennzeichnet, daß der poröse Träger aus Glastuch und Polysulfon ausgewählt ist.

6. Membrane nach einem der Ansprüche 1 bis 5, dadurch gekennzeichnet, daß die anorganische Verbindung aus Heteropolysäuren und Salzen hiervon ausgewählt ist und das Gemisch eine Vielzahl von elektrisch leitenden, einen Teil der Membrane bildenden Teilchen enthält, welche eine solche Größe besitzen, daß ihre Oberflächen mit den Oberflächen der Membrane gleich sind oder sich über diese hinaus erstrecken.

7. Membrane nach Anspruch 6, dadurch gekennzeichnet, daß die elektrisch leitenden Teilchen zur Bildung eines Protons befähigt sind.

8. Membrane nach Anspruch 7, dadurch gekennzeichnet, daß die elektrisch leitenden Teilchen aus einem Metall der Gruppe VIII des Periodensystems oder einer Legierung solcher Metalle bestehen.

9. Membrane nach Anspruch 8, dadurch gekennzeichnet, daß das Metall oder die Legierung auf einem festen Träger niedergeschlagen ist.

10. Membrane nach Anspruch 9, dadurch gekennzeichnet, daß der feste Träger für das Metall oder die Legierung aus wenigstens einer Monoschicht eines kohlehaltigen Pyropolymers bestehend aus wiederkehrenden Einheiten enthaltend wenigstens Kohlenstoff- und Wasserstoffatome, die auf die Oberfläche eines hitzefesten anorganischen Metalloxids mit großer Oberfläche aufgebracht sind, besteht.

11. Membrane nach einem der Ansprüche 1 bis 10, dadurch gekennzeichnet, daß das Metall oder die Legierung Platin, Palladium oder eine Legierung von Platin und Nickel ist.

12. Membrane nach einem der Ansprüche 1 bis 11, dadurch gekennzeichnet, daß die anorganische Verbindung aus Heteropolysäuren und Salzen von Heteropolysäuren der allgemeinen Formel:

$$A_m(X_xY_yO_z)\ nH_2O$$

ausgewählt ist, worin X für Bor, Aluminium, Gallium, Silizium, Germanium, Zinn, Phosphor, Arsen, Antimon, Wismut, Selen, Tellur, Iod oder ein Metall der ersten, zweiten, dritten oder vierten Reihe der Übergangsmetalle des Periodensystems steht, Y anders als X ist und für wenigstens ein Metall der ersten, zweiten, dritten oder vierten Reihe der Übergangsmetall des Periodensystems steht, A Wasserstoff, Ammonium, Natrium, Kalium, Lithium, Rubidium, Caesium, Beryllium, Magnesium, Kalzium, Strontium oder Barium bedeutet und m 1 bis 10, y, bezogen auf x ist gleich 1, 6 bis 12, z 30 bis 80 und n 3 bis 300 ist.

13. Verfahren zur Herstellung einer Membrane aus einem Polymergemisch nach einem der Ansprüche 1 bis 12, dadurch gekennzeichnet, daß man die anorganische Verbindung und das organische Polymer in einem wechselseitig mischbaren Lösungsmittel unter Lösungsbedingungen wahrend einer für die Bildung eines Gemisches ausreichenden Zeitdauer löst, gegebenenfalls die elektrisch leitenden Teilchen zur Lösung hinzufügt und die Lösung und die Teilchen auf einer Gießfläche vermischt, welche gegebenenfalls die Oberfläche des porösen Trägers ist, das Lösungsmittel entfernt und die gebildete, gegebenenfalls mit dem porösen Träger verbunden Membrane gewinnt.

14. Verfahren nach Anspruch 13, dadurch gekennzeichnet, daß die Lösung ein Dispergiermittel enthält.

15. Verfahren nach Anspruch 13 oder 14, dadurch gekennzeichnet, daß die Lösungsbedingungen eine Temperatur im Bereich von Raumtemperatur bis 100°C einschließen.

16. Verfahren nach einem der Ansprüche 13 bis 15, dadurch gekennzeichnet, daß das wechselseitig mischbare Lösungsmittel Wasser ist.

17. Verfahren nach Anspruch 16, dadurch gekennzeichnet, daß die Entfernung des als Lösungsmittel verwendeten Wassers durch Abdampfen erfolgt.

18. Verfahren nach einem der Ansprüche 13 bis 16, dadurch gekennzeichnet, daß Entfernung des Lösungsmittels durch Wiederfällung in einem Nichtlösungsmittel erfolgt.

19. Vorrichtung für die Wahrehmung oder Abtrennung von Wasserstoff bestehend aus einer Membrane, Metallelektroden an beiden Oberflächen der Membrane und Einrichtungen für die Zufuhr eines Wasserstoff enthaltenden Gases zu wenigstens einer Oberfläche der Membrane, dadurch gekennzeichnet, daß die Membrane ein Membrane aus einem Polymergemisch gemäß einem der Ansprüche 1 bis 12 ist.

**Revendications**

1. Membrane en mélange à base de polymère, qui comprend un mélange d'un composé minéral et d'un polymère organique qui est compatible avec ledit composé minéral, caractérisée en ce que le composé minéral est choisi parmi les hétéropolyacides et leurs sels, les acides phosphoriques et l'acide sulfurique, et le polymère organique est choisi parmi un poly(alcool vinylique), un poly(fluorure de vinyle), um poly(oxyde d'éthylène), une polyéthylèneimine, un acide polyacrylique, un polyéthylène-glycol, un acétate de cellulose, un poly (éther de vinylmèthyle et d'éthyle) et des résines phénol-formaldéhyde.

2. Membrane selon la revendication 1, caractérisée en ce que la membrane a une épaisseur de 0,1 à 50 mm.

3. Membrane selon la revendication 1 ou 2, caractérisée en ce que la composé minéral est présent dans le mélange en une proportion de 1 à 70% en poids par rapport au poids du mèlange, et le polymère organique est présent dans le mélange en une proportion de 99 à 30% en poids par rapport au poids du mélange.

4. Membrane selon l'une quelconque des revendications 1 à 3, caractérisée en ce qu'elle forme un composite sur un support poreux pour présenter une résistance structurale accrue.

5. Membrane selon la revendication 4, caractérisée en ce que le support est poreux et choisi entre un tissu de verre et une polysulfone.

6. Membrane selon l'une quelconque des revendications 1 à 5, caractérisée en ce que le composé minéral est chois parmi les hétéropolyacides et leurs sels, et le mélange contient une multitude de particules électriquement conductrices constituant une partie de la membrane, les particules ayant une grosseur telle que leurs surfaces coexistent avec les surfaces de la membrane ou s'étendent au-delà de celles-ci.

7. Membrane selon la revendication 6, caractérisée en ce que les particules électriquement conductrices possèdent la faculté de former un proton.

8. Membrane selon la revendication 7, caractérisée en ce que les particules électriquement conductrices comprennent un métal du Groupe VII du Tableau Périodique ou un alliage de tels métaux.

9. Membrane selon la revendication 8, caractérisée en ce que le métal ou l'alliage est déposé sur un support solide.

10. Membrane selon la revendication 9, caractérisée en ce que le rapport solide du métal ou de l'alliage comprend au moins une monocouche d'un pyropolymère carbonè comprenant des motifs récurrents contenant au moins des atomes de carbone et d'hydrogène, formant un composite sur la surface d'un oxyde mètallique minéral réfractaire à grande surface spécifique.

11. Membrane selon l'une quelconque des revendications 8 à 10, caractérisée en ce que le métal ou alliage est le platine, le palladium ou un alliage de platine et de nickel.

12. Membrane selon l'une quelconque des revendications 1 à 11, caractérisée en ce que le composé minéral est choisi parmi les hétéropolyacides et sels d'hétéropolyacides répondant à la formule générale:

$$A_m(X_xY_yO_z)\ nH_2O$$

dans laquelle X est le bore, l'aluminium, le gallium, le silicium, le germanium, l'étain, le phosphore, l'arsenic, l'antimoine, le bismuth, le sélénium, le tellure, l'iode ou métal des première, deuxième, troisième ou quatrième séries de métaux de transition du Tableau Périodique et Y est différent de X et est au moins un métal des première, deuxième, troisième ou quatrième séries de métaux de transition du Tableu Périodique, A est l'hydrogène, l'ammonium, le sodium, le potassium, le lithium, le rubidium, le césium, le béryllium, le magnésium, le calcium, le strontium ou le baryum, m est 1 à 10, y est 6 à 12 sur la base d'une valeur de x égale à 1, z est 30 à 80 et n est 3 à 300.

13. Procédé pour la préparation d'une membrane en mélange à base de polymère selon l'une quelconque des revendications 1 à 12, caractérisé en ce que l'on dissout le composé minéral et le polymère organique dans un solvant qui leur est mutuellement miscible dans des conditions de dissolution pendant une période de temps suffisante pour former un mélange, on ajoute facultativement les particules électriquement conductrices à la solution et mélange la solution et les particules sur une surface de coulée, qui est facultativement la surface du support poreux, on élimine le solvant et on recueille la membrane résultante, qui forme facultativement un composite sur le support poreux.

14. Procédé selon la revendication 13, caractérisé en ce que la solution contient un agent dispersant.

15. Procédé selon la revendication 13 ou 14, caractérise en ce que les conditions de dissolution comprennent une température dans l'intervalle de la température ambiante à 100°C.

16. Procédé selon l'une quelconque des revendications 13 à 15, caractérisé en ce que le solvant mutuellement miscible est l'eau.

17. Procédé selon la revendication 16, caractérisé en ce que l'élimination de l'eau utilisée comme solvant est effectuée par évaporation.

18. Procédé selon l'une quelconque des revendications 13 à 16, caractérisé en ce que l'élimination du solvant est effectuée par reprécipitation dans un non-solvant.

19. Dispositif de détection d'hydrogène ou de séparation d'hydrogène comprenant une membrane, des électrodes métalliques sur les deux surfaces de ladite membrane, et un moyen pour amener un gaz

contenant de l'hydrogène à l'une au moins des surfaces de la membrane, caractérisé en ce que la membrane est une membrane en mélange à base de polymère selon l'une quelconque des revendications 1 à 12.